# EUROPEAN PATENT APPLICATION

(11) **EP 4 398 365 A1**
(43) Date of publication of application: **10.07.2024**
(21) Application number: 22864454.8
(22) Date of filing: 29.08.2022
(51) Int. Cl.: H01M 10/0567, H01M 10/052, H01M 10/0568, H01M 10/0569

(54) **LITHIUM ION SECONDARY BATTERY AND NONAQUEOUS ELECTROLYTE SOLUTION**

(30) Priority: 31.08.2021 JP 2021141173
(71) Applicant: Kyocera Corporation, Kyoto-shi Kyoto 612-8501 (JP)
(72) Inventor: ABE, Koji, Ube-shi, Yamaguchi 755-8611 (JP)
(74) Representative: TBK
(86) International application number: PCT/JP2022/032306
(87) International publication number: WO 2023/032871

(57) **Abstract**

An object of the present invention is to provide a lithium ion secondary battery having both excellent battery safety when used at a high temperature, which is important for recent secondary batteries installed in vehicles such as electric vehicles, and excellent battery characteristics such as initial capacity and fast charging at a low temperature. A lithium ion secondary battery includes a positive electrode, a negative electrode, a separator, and a non-aqueous electrolytic solution including an electrolyte salt contained in a non-aqueous solvent. The non-aqueous electrolytic solution includes a pivalate ester in an amount that is 0.1 vol% or greater and less than 5 vol% with respect to the non-aqueous solvent. The pivalate ester has from 12 to 13 carbons with a flash point of 90°C or higher and a viscosity of from 2 to 2.3 cp at 25°C.

## Description

### TECHNICAL FIELD

The present invention relates to a lithium ion secondary battery having both excellent battery safety when used at a high temperature and battery characteristics such as initial capacity and fast charging at a low temperature, and also relates a non-aqueous electrolytic solution used in the lithium ion secondary battery.

### BACKGROUND OF INVENTION

In recent years, lithium ion secondary batteries have been widely used not only as power supply for compact size electronic devices but also as power supply for electric vehicles and power storage. A lithium ion secondary battery mainly includes a positive electrode, a non-aqueous electrolytic solution, a separator, and a negative electrode. In particular, a lithium secondary battery including a lithium composite oxide containing Ni as the positive electrode and a carbon material or a titanium oxide as the negative electrode is preferably used. The electrolytic solution in such lithium ion secondary battery is preferably a combination of a cyclic carbonate and an open chain carbonate, with examples of the cyclic carbonate being ethylene carbonate (EC) and propylene carbonate (PC) and examples of the open chain carbonate being dimethyl carbonate (DMC), ethyl methyl carbonate (EMC), and diethyl carbonate (DEC).

However, the use of an open chain carbonate results in a very low flash point, and thus the flash point of DMC, EMC, or DEC drags the flash point of the electrolytic solution as a whole down to around 25°C. Therefore, when such lithium ion secondary battery is used as power supply for secondary batteries installed in vehicles such as electric vehicles, the safety of the battery when used at a high temperature is concerning. As such, in recent years, battery safety has become important in secondary batteries installed in vehicles such as electric vehicles, and nonflammable all-solid electrolytes are attracting attention. However, the performance of non-flammable all-solid electrolytes is still inferior.

Patent Document 1 proposes using a non-aqueous solvent (e.g., EC or PC) containing a tertiary carboxylate having from 4 to 20 carbons in an alkyl group (R₄) bonded to an oxygen atom as the solvent of the electrolytic solution to achieve a lithium secondary battery that has a long charging/discharging cycle life, excellent battery characteristics such as electric capacity and storage characteristics when charged, and that can suppress battery swelling when used at a high temperature.

Patent Document 2 proposes using a non-aqueous electrolytic solution that contains at least three kinds of certain lithium salts as the electrolyte and further contains a tertiary carboxylate having from 1 to 6 carbons in an alkyl group (R₄) bonded to an oxygen atom to achieve a lithium secondary battery that can improve the capacity retention rate after high-temperature storage and that can suppress an increase in impedance after high-temperature storage.

Among such known arts, Patent Document 1 presents that the 50th cycle discharge capacity retention rate of a lithium secondary battery can be improved by adding methyl pivalate, ethyl pivalate, butyl pivalate, hexyl pivalate, octyl pivalate, decyl pivalate, or dodecyl pivalate as the tertiary carboxylate to the non-aqueous solvent of the electrolytic solution (Examples). However, the use of these pivalate esters lowers the flash point of the electrolytic solution as a whole; meanwhile, when one of these pivalate esters which does not lower the flash point of the electrolytic solution as a whole is used, the viscosity increases, slowing down the movement of lithium ions, and, in particular, resulting in the deterioration of fast charging characteristics at a low temperature. Such issues have not been recognized in the past, and have become clear through research and development of electrolytic solutions by the present inventors, making the issues newly discovered issues.

In addition, Patent Document 2 presents that the discharge capacity retention rate after 60°C high-temperature charging and storage was improved and an increase in impedance was suppressed (Examples), but Patent Document 2 also does not contain any information about issues such as lowering of the flash point of the electrolytic solution as a whole or deterioration of fast charging characteristics at a low temperature. So far, emphasis has been placed on the performance of secondary batteries installed in vehicles such as electric vehicles when these secondary batteries are stored at a high temperature after being charged, but battery safety and the need for fast charging at a low temperature have not been recognized. This suggests that the rise of nonflammable all-solid electrolytes and the effects of fast charging characteristics at a low temperature were not predicted.

### CITATION LIST

### PATENT LITERATURE

Patent Document 1: JP 4691871 B
Patent Document 2: JP 6575521 B

### SUMMARY

### PROBLEM TO BE SOLVED

An object of the present invention is to solve the issues mentioned above and to provide a lithium ion secondary battery having both excellent battery safety when used at a high temperature, which is important for recent secondary batteries installed in vehicles such as electric vehicles, and excellent battery characteristics such as initial capacity and fast charging at a low temperature.

### SOLUTION TO PROBLEM

As a result of intensive study in order to solve the above issues, the present inventors found that the issues above can be solved by using a pivalate ester having from 12 to 13 carbons with a flash point of 90°C or higher and a viscosity of from 2 to 2.3 cp at 25°C in a lithium ion secondary battery including a positive electrode, a negative electrode, a separator, and a non-aqueous electrolytic solution made by dissolving an electrolyte salt in a non-aqueous solvent, and by adding the pivalate ester in a range that is 0.1 vol% or greater and less than 5 vol% with respect to the non-aqueous solvent.

In the known art disclosed in Patent Document 1, hexyl pivalate [R₄ = n-hexyl group] has a flash point of 77°C, which is more than 50°C lower than that of the main solvents EC (having a flash point of 143°C) and PC (having a flash point of 133°C). Accordingly, as the amount of hexyl pivalate increases, the flash point of hexyl pivalate lowers the flash point of the electrolytic solution as a whole. Meanwhile, octyl pivalate [R₄ = n-octyl group] has a flash point of 103°C, which is higher than that of hexyl pivalate. However, the viscosity of octyl pivalate is 2.5 cp, which is higher than the viscosity of PC (2.3 cp), a main solvent. As such, the movement of lithium ions slow down, and in particular the fast charging characteristics at a low temperature deteriorates. Furthermore, Patent Document 1 describes sec-octyl pivalate as an example of a pivalate, and indicates that the ester moiety of the pivalate ester is branched, but does not specify whether it is a 2-octyl group, a 3-octyl group, or a 4-octyl group. Patent Document 1 contains no information about the issues of lowering of the flash point of the electrolytic solution as a whole or deterioration of fast charging characteristics at a low temperature, and does not disclose specifically a pivalate ester having from 12 to 13 carbons with a flash point of 90°C or higher and a viscosity of from 2 to 2.3 cp at 25°C. Even for a person skilled in the art, it is not easy to conceive the present invention, in which a pivalate ester having from 12 to 13 carbons with a flash point of 90°C or higher and a viscosity of from 2 to 2.3 cp at 25°C is used and in which the pivalate ester is added in a range that is 0.1 vol% or greater and less than 5 vol% with respect to the non-aqueous solvent, from Patent Document 1.

Further, in the known art disclosed in Patent Document 2, the carbon number of R₄ in the tertiary carboxylate is from 1 to 6, which is different from that of the pivalate ester in the present invention. Similar to Patent Document 1, Patent Document 2 also does not contain any information about the issues to be solved by the present invention. As such, it is not easy for a person skilled in the art to conceive the pivalate ester in the present invention and the added amount of the pivalate ester from Patent Document 2. Note that, paragraph [0034] of Patent Document 2 describes n-heptyl pivalate (with R₄ having 7 carbons) in which R₄ does not have from 1 to 6 carbons. However, this n-heptyl pivalate is written between n-butyl pivalate (with R₄ having 4 carbons) and n-hexyl pivalate (with R₄ having 6 carbons), and any person skilled in the art can recognize that this is a writing error for "n-pentyl pivalate" (with R₄ having 5 carbons).

As described above, the present invention discovered issues which have not been recognized so far, and found that the issues can be solved by using a certain pivalate ester in a certain amount. In addition, in the present invention, the electrolyte salt in the non-aqueous electrolytic solution is preferably LiN(SO₂F)₂, and the non-aqueous solvent is preferably ethylene carbonate/propylene carbonate, which have high flash points, used in a volume ratio of from 49/51 to 10/90. It has been found that the effects of the present invention can be further improved by using the electrolyte salt and the non-aqueous solvent in combination.

That is, the present invention is specified by the following.
(1) A lithium ion secondary battery including a positive electrode, a negative electrode, a separator, and a non-aqueous electrolytic solution including an electrolyte salt contained in a non-aqueous solvent, the non-aqueous electrolytic solution containing a pivalate ester in an amount that is 0.1 vol% or greater and less than 5 vol% with respect to the non-aqueous solvent, the pivalate ester having from 12 to 13 carbons with a flash point of 90°C or higher and a viscosity of from 2 to 2.3 cp at 25°C.
(2) The lithium ion secondary battery according to (1), wherein the pivalate ester is at least one selected from the group consisting of n-heptyl pivalate, 2-ethylhexyl pivalate, and 2-octyl pivalate.
(3) The lithium ion secondary battery according to (1) or (2), comprising, as the electrolyte salt, from 0.5 to 3 mol/L of LiN(SO₂F)₂ in the non-aqueous solvent, or from 0.5 to 3 mol/L of LiN(SO₂F)₂ and LiPF₆ in the non-aqueous solvent, wherein LiN(SO₂F)₂/LiPF₆, a weight ratio of the LiN(SO₂F)₂ to the LiPF₆, is from 100/0 to 1/99.
(4) The lithium ion secondary battery according to any one of (1) to (3), wherein the non-aqueous solvent contains ethylene carbonate and propylene carbonate, and ethylene carbonate/propylene carbonate, a volume ratio of the ethylene carbonate to the propylene carbonate, is from 49/51 to 10/90.
(5) A non-aqueous electrolytic solution including an electrolyte salt dissolved in a non-aqueous solvent, the non-aqueous electrolytic solution containing a pivalate ester in an amount that is 0.1 vol% or greater and less than 5 vol% with respect to the non-aqueous solvent, the pivalate ester having from 12 to 13 carbons with a flash point of 90°C or higher and a viscosity of from 2 to 2.3 cp at 25°C.
(6) The non-aqueous electrolytic solution according to (5), including at least one selected from the group consisting of (i), (ii) and (iii) below:
   (i) the pivalate ester is at least one selected from the group consisting of n-heptyl pivalate, 2-ethylhexyl pivalate, and 2-octyl pivalate;
   (ii) the electrolyte salt is LiN(SO₂F)₂ and LiPF₆, the LiN(SO₂F)₂ and the LiPF₆ being dissolved in a total amount of from 0.5 to 3 mol/L in the non-aqueous solvent, and LiN(SO₂F)₂/LiPF₆, a weight ratio of the LiN(SO₂F)₂ to the LiPF₆, is from 100/0 to 1/99;
   (iii) the non-aqueous solvent is ethylene carbonate and propylene carbonate, ethylene carbonate/propylene carbonate, a volume ratio of the ethylene carbonate to the propylene carbonate, is from 49/51 to 10/90.

### ADVANTAGEOUS EFFECT

The lithium ion secondary battery according to an embodiment of the present invention has excellent battery safety when used at a high temperature, and further has excellent battery characteristics such as initial capacity and fast charging at a low temperature. In addition, using the non-aqueous electrolytic solution according to an embodiment of the present invention can yield a lithium ion secondary battery having excellent safety when used at a high temperature and also having excellent battery characteristics such as initial capacity and fast charging at a low temperature.

### DESCRIPTION OF EMBODIMENTS

A lithium ion secondary battery according to an embodiment of the present includes a positive electrode, a negative electrode, a separator, and a non-aqueous electrolytic solution containing an electrolyte salt in a non-aqueous solvent. The non-aqueous electrolytic solution contains a pivalate ester in an amount that is 0.1 vol% or greater and less than 5 vol% with respect to the non-aqueous solvent. The pivalate ester has from 12 to 13 carbons, a flash point of 90°C or higher, and a viscosity of from 2 to 2.3 cp at 25°C. In an embodiment of the present invention, the non-aqueous solvent is not limited as long as it can be used in a non-aqueous electrolytic solution of a lithium ion secondary battery. The non-aqueous solvent may have a flash point of 120°C or higher, and is preferably a cyclic carbonate having a flash point of 120°C or higher. The cyclic carbonate having a flash point of 120°C or higher is preferably EC (having a flash point of 143°C), PC (having a flash point of 133°C), or a mixture of the foregoing. EC has a melting point of 36°C and is solid at room temperature. As such, when the proportion of EC in the non-aqueous solvent increases, EC may precipitate at a low temperature, leading to a possible decrease of low temperature characteristics. Meanwhile, when the proportion of PC increases, the ionic conductivity of the non-aqueous electrolytic solution may decrease. Therefore, when EC and PC are used in mixture, the volume ratio of EC to PC, or EC/PC, in the non-aqueous solvent is preferably from 49/51 to 10/90, and more preferably from 40/60 to 20/80. When EC and PC are used in mixture, the non-aqueous solvent may consist of only EC and PC, or may contain a non-aqueous solvent in addition to EC and PC. Accordingly, when a solvent in addition to EC and PC is contained in the non-aqueous solvent, the volume ratio of EC and PC is the volume ratio of EC and PC contained in the non-aqueous solvent. When EC and PC are used in mixture, the total amount of EC and PC contained in the non-aqueous solvent is preferably from 90 to 100 vol%. Another example of the cyclic carbonate having a flash point of 120°C or higher is fluoroethylene carbonate (FEC, having a flash point of 122°C). Examples of the additional non-aqueous solvent in the present invention include vinylene carbonate (VC, having a flash point of 80°C) which is a cyclic carbonate. When PC is used, from 0.5 to 10 vol% of PC can be replaced with the foregoing.

In an embodiment of the present invention, the pivalate ester to be added to the non-aqueous solvent is not limited as long as it has from 12 to 13 carbons, a flash point of 90°C or higher, and a viscosity of from 2 to 2.3 cp at 25°C, but the pivalate ester is preferably one or more selected from n-heptyl pivalate, which is a linear pivalate, as well as 2-ethylhexyl pivalate and 2-octyl pivalate, which are branched pivalate esters, and particularly preferably 2-ethylhexyl pivalate which is a branched ester with the highest flash point despite its low viscosity. When two or more pivalate esters are used, a mixture of n-heptyl pivalate and 2-octyl pivalate, a mixture of n-heptyl pivalate and 2-ethylhexyl pivalate, a mixture of 2-octyl pivalate and 2-ethylhexyl pivalate, and a mixture of n-heptyl pivalate, 2-octyl pivalate and 2-ethylhexyl pivalate are particularly preferable because they can be adjusted to have a high flash point and a low viscosity.

In the non-aqueous electrolytic solution according to an embodiment of the present invention, the pivalate ester is added in an amount that is 0.1 vol% or greater and less than 5 vol% with respect to the non-aqueous solvent. Here, "0.1 vol% or greater and less than 5 vol% with respect to the non-aqueous solvent" means that the pivalate ester is 0.1 or greater and less than 5 (volume) per 100 (volume) of the non-aqueous solvent. When the added amount (content in the non-aqueous electrolytic solution) of the pivalate ester is less than 0.1 vol% with respect to the non-aqueous solvent, the permeability of the separator may be insufficient and the battery performance may deteriorate; meanwhile, when the added amount of the pivalate ester is 5 vol% or greater, the flash point of the electrolytic solution may decrease. In addition, when the permeability into the separator is excessive, the separator resistance may increase and the low-temperature characteristics may deteriorate. In an embodiment according to the present invention, the preferred range of the added amount of the pivalate ester may be 0.5 vol% or greater and less than 5 vol%, 1 vol% or greater and less than 5 vol%, 0.5 vol% or greater and 4.5 vol% or less (from 0.5 to 4.5 vol%), or 1 vol% or greater and 4.5 vol% or less (from 1 to 4.5 vol%). In the specification of this application, the expression "from A to B" means A or greater and B or less. When two or more types of the pivalate ester according to an embodiment of the present invention are used, the total added amount of the pivalate ester is 0.1 vol% or greater and less than 5 vol% with respect to the non-aqueous solvent, and a preferred range of the total added amount is, for example, 0.5 vol% or greater and less than 5 vol%, 1 vol% or greater and less than 5 vol%, from 0.5 to 4.5 vol%, or from 1 to 4.5 vol%.

In a battery using a graphite negative electrode, in order to suppress the reductive decomposition of PC on the graphite negative electrode, at least one selected from the group consisting of the following is preferably added to the non-aqueous solvent: pentafluorophenyl methanesulfonate (having a flash point of 155°C), 2-propynyl methanesulfonate (having a flash point of 124°C), and 1,3-propanesultone (having a flash point of higher than 110°C), the first two being open chain compounds having two S=O backbones and one S-O backbone, the last one being a cyclic compound having two S=O backbones and one S-O backbone, all having a flash point of higher than 110°C. A compound having a flash point higher than 90°C, which is the flash point of the pivalate ester according to an embodiment of the present invention, can bring the flash point of the non-aqueous electrolytic solution according to an embodiment of the present invention to 120°C or higher, which is advantageous. As such, the content of such compound is preferably added to the non-aqueous electrolytic solution within a range of from 0.1 to 5 mass% with respect to the non-aqueous electrolytic solution as a whole. In an embodiment of the present invention, the non-aqueous solvent does not exclude a non-aqueous solvent having a low flash point, such as DMC, EMC, DEC, or other open chain carbonates. In the present invention, the combination of the non-aqueous solvent and the pivalate ester is preferably a combination in which the flash point of the non-aqueous solvent is 100°C or higher after the addition of the pivalate, and more preferably a combination in which the flash point is 120°C or higher. In an embodiment of the present invention, the flash point of the non-aqueous electrolytic solution is preferably 100°C or higher, and more preferably 120°C or higher. The present invention does not exclude the case where a pivalate ester other than the pivalate ester according to an embodiment of the present invention is contained in the non-aqueous solvent. When used in combination, the pivalate ester other than the pivalate ester according to an embodiment of the present invention (hereinafter, also referred to as "another pivalate") preferably has either the characteristic of a flash point of 90°C or higher or the characteristic of a viscosity of from 2 to 2.3 cp at 25°C from the viewpoint of reducing the influence on the effects of the present invention. Examples of such pivalate ester include n-octyl pivalate (having 13 carbons, a flash point of 104°C, and a viscosity of 2.52 cp), n-nonyl pivalate (having 14 carbons, a flash point of 116°C, and a viscosity of 3.01 cp), and 2-nonyl pivalate (having 14 carbons, a flash point of 104°C, and a viscosity of 2.65 cp). When the pivalate ester according to an embodiment of the present invention is used in combination with another pivalate, the total amount of the pivalate ester according to an embodiment of the present invention and another pivalate ester is preferably less than 5 vol%.

In an embodiment of the present invention, the electrolyte salt is not limited as long as it can be used in an electrolytic solution of a lithium ion secondary battery. Examples of the electrolyte salt include LiN(SO₂F)₂, LiPF₆, LiN(SO₂CF₃)₂, and LiBF₄. LiN(SO₂F)₂ is preferable because it has high chemical thermal stability and can improve battery performance at a high temperature. Also, the addition of a certain amount of LiPF₆ is preferable because LiPF₆ has an effect of facilitating improvement of battery performance at a low temperature. The reason is inferred to be that an increase in the solubility of Li salt in the pivalate ester in the battery leads to smooth movement of Li ions in the vicinity of the separator. The total concentration of the electrolyte salt contained in the non-aqueous solvent is preferably from 0.5 to 3 mol/L (that is, from 0.5 to 3 mol of the electrolyte salt per 1 L of the non-aqueous solvent), and more preferably from 1 to 2 mol/L. In addition, in using LiN(SO₂F)₂ alone, and in using LiN(SO₂F)₂ and LiPF₆ in combination, the weight ratio of LiN(SO₂F)₂ to LiPF₆, or LiN(SO₂F)₂/LiPF₆, is preferably in a range of, for example, from 100/0 to 1/99, from 100/0 to 50/50, from 100/0 to 70/30, from 95/5 to 50/50, or from 90/10 to 70/30. In an embodiment of the present invention, the non-aqueous electrolytic solution can be prepared by dissolving the pivalate ester and the electrolyte salt in the non-aqueous solvent.

In an embodiment of the present invention, the separator is not limited as long as it is a separator that can be used in a lithium ion secondary battery. The separator is most preferably a separator composed of a microporous film made of a polyolefin material such as polypropylene or polyethylene, but may also be a non-woven fabric separator. The porous sheet or the non-woven fabric may have a single-layer structure or a multi-layer structure, and the surface of the separator may be coated with an oxide such as alumina. The thickness of the separator needs to be as small as possible in order to increase the volume energy density of the battery. Therefore, the thickness of the separator is preferably 20 µm or less, and more preferably 10 µm or less.

In an embodiment of the present invention, the negative electrode is not limited as long as it can be used in a lithium ion secondary battery. In order to increase the volume energy density, the negative electrode is preferably, for example, a graphite material such as natural graphite or artificial graphite, or a carbon material such as hard carbon or soft carbon. In addition, in order to improve fast charging and discharging, the negative electrode is preferably a titanium oxide that does not expand or contract during charging and discharging, with examples thereof being a titanium oxide having a spinel structure such as Li₄Ti₅O₁₂ and a titanium oxide such as TiNb₂O₇ and Ti₂Nb₁₀O₂₉, and particularly preferably a titanium oxide having a spinel structure such as Li₄Ti₅O₁₂.

A negative electrode mixture material is obtained by kneading the negative electrode active material and a binder such as ethylene propylene diene terpolymer (EPDM), polytetrafluoroethylene (PTFE), polyvinylidene fluoride (PVDF), a copolymer of styrene and butadiene (SBR), a copolymer of acrylonitrile and butadiene (NBR), or carboxymethyl cellulose (CMC).

In an embodiment of the present invention, examples of a positive electrode active material of the positive electrode include LiCoO₂, LiNiO₂, LiCo_{1/3}Ni_{1/3}Mn_{1/3}O₂, LiCo_{0.15}Ni_{0.8}Al_{0.05}O₂, LiNi_{0.8}Co_{0.2}O₂, and LiNi_{0.5}Mn_{1.5}O₄. In order to increase the volume energy density, the positive electrode active material containing a lithium composite oxide with an atomic ratio of Ni of 50% or greater is preferably LiNi_{0.5}Co_{0.2}Mn_{0.3}O₂, LiNi_{0.6}Co_{0.2}Mn_{0.2}O₂, LiNi_{0.8}Co_{0.1}Mn_{0.1}O₂, and LiCo_{0.15}Ni_{0.80}Al_{0.05}O₂. In addition, in order to improve fast charging and discharging, the positive electrode active material is preferably LiMn₂O₄ having a spinel structure or LiFePO₄ having an olivine structure.

A positive electrode mixture material may have a known or commercially available conductive additive such as acetylene black, Ketjen black, or another carbon black, carbon nanotubes, carbon fibers, activated carbon, and graphite used in the positive electrode active material. The positive electrode mixture material is prepared by kneading the positive electrode active material and a binder such as polytetrafluoroethylene (PTFE), polyvinylidene fluoride (PVFF), a copolymer of styrene and butadiene (SBR), a copolymer of acrylonitrile and butadiene (NBR), or carboxymethyl cellulose (CMC) to produce a positive electrode mixture in the form of a slurry, applying this positive electrode material to an aluminum foil serving as a current collector, subjecting the resulting product to drying and compression molding and then heat treatment at 80°C under vacuum, for example.

As the combination of the positive electrode mixture material and the negative electrode mixture material used in the present invention, the above-mentioned combination is a preferred example for increasing the volume energy density or for improving fast charging and discharging, and a battery can be produced accordingly.

In an embodiment of the present invention, the current collector used is not limited, but is usually an aluminum foil or a copper foil, and can be a porous current collector which further improves the permeability of the electrolytic solution.

In the present invention, the solvent used in the binder is not limited, and various solvents can be selected to accommodate the active material or the binder to be used. Specifically, when the binder is PVDF, the solvent is preferably N-methyl-2-pyrrolidone. Meanwhile, when the binder is a rubber-based binder such as styrene butadiene rubber (SBR), polytetrafluoroethylene, polyvinyl alcohol, or carboxymethyl cellulose (CMC), the solvent is preferably water.

In an embodiment of the present invention, the structure of the lithium secondary battery is not limited, but the secondary battery having a positive electrode, a negative electrode, and a separator may have the shape of, for example, a coin-type battery, a cylindrical battery, a prismatic battery, or a pouch-type battery. In an embodiment of the present invention, the lithium secondary battery can be manufactured by assembling the positive electrode, the negative electrode, and the separator described above according to the structure described above and injecting the non-aqueous electrolytic solution described above into the separator.

### EXAMPLES

Hereinafter, the present invention will be specifically explained with reference to Examples, but the technical scope of the present invention is not limited to these examples.

### Examples 1 to 3 and Comparative Examples 1 to 4

### Measurement Method of Flash Point

The individual flash points of the pivalate esters of Examples 1 to 3 and Comparative Examples 1 to 5 listed in Table 1 were measured using PMA500 (available from Anton Paar), a Pensky-Martens flash point tester. The results are listed in Table 1.

### Measurement Method of Viscosity

The mechanism of the viscometer used was rotational. The model was VISCOMETER DV-I PrimeLV (available from BROOKFIELD). The individual viscosities of the pivalate esters were measured five times under the condition of 25°C, and the average values were taken as the viscosities. The results are listed in Table 1.

### Measurement Method of Permeability of Electrolytic Solution into Pores of Microporous Separator

Electrolytic solutions were prepared by adding pivalate esters in an amount that is from 3 to 4 vol% with respect to 100 vol% of a non-aqueous solvent of 1 M LiN(SO₂F)₂ having EC/PC of 40/60 (volume ratio). Three-layer microporous membrane separators having a polyethylene layer sandwiched between two polypropylene layers were immersed in the electrolytic solutions for 15 seconds, and then taken out and visually observed. The added amounts at which the light transmittances of the separators were observed to have completely changed from opaque to transparent were taken as the permeability (wettability) with regards to the non-aqueous solvent and expressed in vol%. The results are listed in Table 1. Note that, the expression "Two Layers" in the table indicates that the non-aqueous solvent and the pivalate ester added were not completely mixed with each other, and the whole or a part of the mixture separated into two layers and did not penetrate the separator.

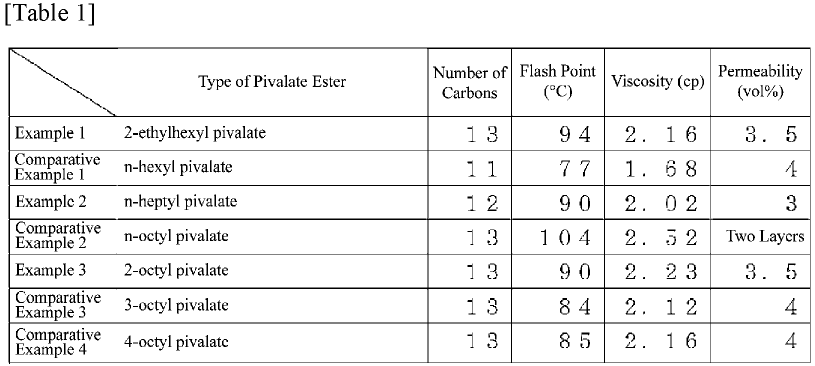

The results listed in Table 1 indicate that the electrolytic solutions using the pivalate ester according to an embodiment of the present invention had excellent permeability. In considering the results of Examples 1 and 2 as well as the result of Comparative Example 1, the individual viscosity of n-hexyl pivalate in Comparative Example 1 was lower than the individual viscosities of 2-ethylhexyl pivalate in Example 1 and n-heptyl pivalate in Example 2. However, the permeabilities of the electrolytic solutions were 3.5 vol% in Example 1 and 3 vol% in Example 2, whereas the permeability of the electrolytic solution was 4 vol% in Comparative Example 1. Comparative Example 1 had a lower individual viscosity, but a larger added amount was required. That is, when the pivalate ester according to an embodiment of the present invention is used, the added amount of the pivalate ester having a flash point lower than those of non-aqueous solvents such as EC and PC can be reduced, and the permeability of the electrolytic solution can be improved. Furthermore, the flash points of 2-ethylhexyl pivalate in Example 1 and n-heptyl pivalate in Example 2 were higher than the flash point of n-hexyl pivalate in Comparative Example 1, indicating that a pivalate ester having a high flash point can be used to improve the permeability of the electrolytic solution. This can solve the issue that the addition of pivalate ester lowers the flash point of the electrolytic solution as a whole. At the same time, this can also solve the issue that an increase in the viscosity of the electrolytic solution and a slowdown in the movement of lithium ions result in a decrease in fast charging characteristics at a low temperature. Also in considering the result of Example 3 and the results of Comparative Examples 2 to 4, n-octyl pivalate in Comparative Example 2 had a high flash point of 104°C but also had a high viscosity of 2.52. When from 3 to 4 vol% of n-octyl pivalate was added, a part of the mixture was not mixed well and separated into two layers. Although the individual viscosities of 3-octyl pivalate in Comparative Example 3 and 4-octyl pivalate in Comparative Example 4 were lower than the individual viscosity of 2-octyl pivalate in Example 3, the penetrability of the electrolytic solution was 3.5 vol% in Example 3 and 4 vol% in Comparative Examples 3 and 4. Comparative Examples 3 and 4 had lower individual viscosities, but larger added amounts were required. Furthermore, the flash points of 3-octyl pivalate in Comparative Example 3 and 4-octyl pivalate in Comparative Example 4 were lower than the flash point of 2-octyl pivalate in Example 3. The above indicates that Example 3 and Comparative Examples 2 to 4 can also achieve the effects described regarding the results of Examples 1 and 2 and Comparative Example 1 in the present invention.

### Example 4

An electrolytic solution of Example 4 was prepared in the same manner as in Examples 1 to 3 except that 1 vol% of n-heptyl pivalate and 2 vol% of n-octyl pivalate were added as the pivalate. The permeability of the electrolytic solution of Example 4 was evaluated in the same manner as in Examples 1 to 3. A microporous membrane separator was immersed in the electrolytic solution of Example 4 for 15 seconds, and then taken out and visually observed. It was found that the light transmittance of the separator completely changed from opaque to transparent. Although n-octyl pivalate has a high flash point as presented in Comparative Example 2, n-octyl pivalate separated into two layers when used alone. However, adding a small amount of n-heptyl pivalate yielded an electrolytic solution having excellent permeability. As described above, the pivalate ester according to an embodiment of the present invention has an effect of improving the permeability of the electrolytic solution even in a small amount. As such, using the pivalate ester enables the use of a pivalate ester having a high flash point but having a high viscosity that negatively affects the permeability of electrolytic solution.

The above indicates that the use of the pivalate ester having from 12 to 13 carbons with a flash point of 90°C or higher according to an embodiment of the present invention yielded a battery having a flash point with excellent safety when used at a high temperature. At the same time, the added amount of the pivalate ester at which the electrolytic solution completely permeated into the separator was smaller than that of Comparative Examples, and the permeability of the electrolytic solution was improved even when the added amount of the pivalate ester was very small. This indicates that the use of the pivalate ester had a strong effect of improving the ability to penetrate into the separator. In addition, regarding the pivalate ester having from 12 to 13 carbons with a flash point of 90°C or higher and a viscosity of from 2 to 2.3 cp at 25°C according to an embodiment of the present invention, the present inventors found a specific range thereof in which the added amount can be reduced, the flash point can be raised, and the viscosity can be lowered. The electrolytic solution containing the pivalate ester according to an embodiment of the present invention has a low viscosity and excellent permeability into separator. As such, during the mass production process of lithium ion secondary batteries, when filling a battery container with an electrolytic solution after installing a laminate body or a wound body made of a positive electrode sheet, a separator, and a negative electrode sheet, the electrolytic solution containing the pivalate ester quickly penetrates a microporous separator, making it possible to shorten the manufacturing time of lithium ion secondary batteries. Meanwhile, a clay-type lithium secondary battery includes two electrode layers of clay-type positive and negative electrodes instead of sheet-type positive and negative electrodes, and includes a separator separating the two electrode layers. In a method for manufacturing such clay-type lithium secondary batteries, the use of an electrolytic solution having a high flash point is also effective in terms of safety.

### Example 5

### Preparation of Electrolytic Solution

A non-aqueous solvent in which 2-ethylhexyl pivalate was 4 vol% with respect to 100 vol% of an electrolytic solution of 1M LiN(SO₂F)₂ and 0.1 M LiPF₆ and EC/PC having a volume ratio of 1/2 was prepared.

Preparation of Lithium Secondary Battery and Measurement of Battery Characteristics 80 wt% of LiNi_{0.8}Co_{0.1}Mn_{0.1}O₂ (positive electrode active material, abbreviated as NCM811), 10 wt% of acetylene black (conductive additive), and 10 wt% of polyvinylidene fluoride (binder) were mixed, and 1-methyl-2-pyrrolidone was added to the mixture to form a slurry. Then, the slurry was applied onto an aluminum foil. Thereafter, the resulting product was subjected to drying and compression molding to prepare a positive electrode. Similarly, 90 wt% of Li₄Ti₅O₁₂ (negative electrode active material, abbreviated as LTO) and 10 wt% of polyvinylidene fluoride (binder) were mixed, and 1-methyl-2-pyrrolidone was added to the mixture to form a slurry. Then, the slurry was applied on an aluminum foil. Thereafter, the resulting product was subjected to drying, compression molding, and heat treatment to prepare a negative electrode. The separator was a 20-micron microporous film having three layers, with a layer of polyethylene being sandwiched between two layers of polypropylene. The electrolytic solution above was injected into the separator, resulting in a coin cell (having a diameter of 20 mm and a thickness of 3.2 mm).

This coin cell was subjected to charging/ discharging tests at 0°C, 25°C and 60°C using a charging/discharging device ACD-MO1A (available from Aska Electronic Co., Ltd.) with the operating voltage set to from 3.0 V to 1.4 V at 25°C. The charging and discharging conditions are listed in Table 2.

**[Table 2]**

| Number of Cycles | Charge Rate (C) | Charge Current Value (mA) | Charge Time (min) | Discharge Rate (C) | Discharge Current Value (mA) |
|---|---|---|---|---|---|
| 1 ∼ 3 | 1.5 | 1.15 | 40 | 1.5 | 1.15 |
| 4 ∼ 5 | 10 | 7 | 6 | | |
| 6 ∼ 7 | 20 | 14 | 3 | | |
| 8 ∼ 9 | 1.5 | 1.5 | 40 | | |

### Examples 6 to 8 and Comparative Example 5

Coin batteries were prepared in the same manner as in Example 5 except that the pivalate ester used was changed to those listed in Table 3, and the battery characteristics were measured.

**[Table 3]**

| | Positive Electrode | Negative Electrode | Electrolyte Salt | Non-aqueous Solvent (v/v) | Pivalate Ester | Added Amount (vol%) |
|---|---|---|---|---|---|---|
| Example 5 | NCM811 | LT0 | 1M LiN(SO₂F)₂ +0.1M LiPF₆ | EC/PC=1/2 | 2-ethylhexyl pivalate | 4 |
| Example 6 | NCM811 | LT0 | 1M LiN(SO₂F)₂ +0.1M LiPF₆ | EC/PC=1/2 | n-heptyl pivalate | 4 |
| Example 7 | NCM811 | LT0 | 1M LiN(SO₂F)₂ +0.1M LiPF₆ | EC/PC-1/2 | n-heptyl pivalate | 2 |
| | | | | | 2-ethylhcxyl pivalate | 2 |
| Example 8 | NCM811 | LT0 | 1M LiN(SO₂F)₂ +0.1M LiPF₆ | EC/PC=1/2 | n-heptyl pivalate | 1 |
| | | | | | n-octyl pivalate | 2 |
| Comparative Example 5 | NCM811 | LT0 | 1M LiN(SO₂F)₂ +0.1M LiPF₆ | EC/PC=1/2 | n-octyl pivalate | 4 |

The results of Examples 5 to 8 and Comparative Example 5 indicate that in terms of initial capacity and 20 C fast charging at a low temperature (0°C), the electrolytic solution of Examples had better results than that of Comparative Example. The results are listed in Tables 4 to 6. Table 4 lists the test results at 0°C, Table 5 lists the test results at 25°C, and Table 6 lists the test results at 60°C. The numbers in the tables represent capacity ratios. The value of the battery capacity at each cycle number at each test temperature in Comparative Example 5 was used as the standard (1.00), and the capacity ratios were obtained by dividing the value in each of Examples 5 to 8 by the value in Comparative Example 5. At high charging rates of 10 C and 20 C, a difference occurred between the results of Examples and Comparative Example, and the capacity ratios also increased. In particular, the capacity ratios at the sixth cycle (20 C) at 0°C were large. This indicates that the fast charging characteristics at a low temperature were excellent. In addition, the capacities at the first cycle were the same as those at the eighth cycle, indicating that there was no battery capacity deterioration. It was also found that a mixture of 2-ethylhexyl pivalate having a relatively high flash point and n-heptyl pivalate having a relatively low viscosity could further enhance the effects of the present invention. It was also found that the effects of the present invention could be achieved even with n-octyl pivalate, which is a pivalate ester other than the pivalate ester according to an embodiment of the present invention, by simply using a mixture in which a part of n-octyl pivalate was replaced with n-heptyl pivalate, which is a pivalate ester according to an embodiment of the present invention. The above indicates that the lithium ion secondary battery using the non-aqueous electrolytic solution according to an embodiment of the present invention not only has excellent safety during use at a high temperature but also is excellent in fast charging at a low temperature.

**[Table 4]**

| 0°C | First Cycle | Fourth Cycle | Sixth Cycle | Eighth Cycle |
|---|---|---|---|---|
| Example 5 | 1.00 | 1.22 | 1.39 | 1.00 |
| Example 6 | 1.00 | 1.21 | 1.37 | 1.00 |
| Example 7 | 1.00 | 1.24 | 1.42 | 1.00 |
| Example 8 | 1.00 | 1.15 | 1.26 | 1.00 |
| Comparative Example 5 | 1.00 | 1.00 | 1.00 | 1.00 |

**[Table 5]**

| 25°C | First Cycle | Fourth Cycle | Sixth Cycle | Eighth Cycle |
|---|---|---|---|---|
| Example 5 | 1.00 | 1.18 | 1.21 | 1.00 |
| Example 6 | 1.00 | 1.17 | 1.20 | 1.00 |
| Example 7 | 1.00 | 1.20 | 1.2 3 | 1.00 |
| Example 8 | 1.00 | 1.16 | 1.17 | 1.00 |
| Comparative Example 5 | 1.00 | 1.00 | 1.00 | 1.00 |

**[Table 6]**

| 60°C | First Cycle | Fourth Cycle | Sixth Cycle | Eighth Cycle |
|---|---|---|---|---|
| Example 5 | 1.00 | 1.15 | 1.08 | 1.00 |
| Example 6 | 1.00 | 1.14 | 1.04 | 1.00 |
| Example 7 | 1.00 | 1.17 | 1.06 | 1.00 |
| Example 8 | 1.00 | 1.15 | 1.06 | 1.00 |
| Comparative Example 5 | 1.00 | 1.00 | 1.00 | 1.00 |

Even in batteries that place emphasis on volume energy density and that have LiNi_{0.5}Co_{0.2}Mn_{0.3}O₂ as the positive electrode active material and a mixture of natural graphite and artificial graphite as the negative electrode active material, the lithium ion secondary battery of the present invention had a difference in fast charging characteristics smaller than when LTO was used as the negative electrode active material, but had a similar tendency in the fast charging characteristics.

### INDUSTRIAL APPLICABILITY

The use of the non-aqueous electrolytic solution of the present invention in the production of lithium ion secondary batteries can yield lithium ion secondary batteries having excellent battery safety during use at a high temperature and excellent battery characteristics such as fast charging at a low temperature. The contribution of this invention to the industry is immeasurable.

## Claims

1. A lithium ion secondary battery comprising a positive electrode, a negative electrode, a separator, and a non-aqueous electrolytic solution comprising an electrolyte salt contained in a non-aqueous solvent, the non-aqueous electrolytic solution comprising a pivalate ester in an amount that is 0.1 vol% or greater and less than 5 vol% with respect to the non-aqueous solvent, the pivalate ester having from 12 to 13 carbons with a flash point of 90°C or higher and a viscosity of from 2 to 2.3 cp at 25°C.

2. The lithium ion secondary battery according to claim 1, wherein the pivalate ester is at least one selected from the group consisting of n-heptyl pivalate, 2-ethylhexyl pivalate, and 2-octyl pivalate.

3. The lithium ion secondary battery according to claim 1 or 2, comprising, as the electrolyte salt, from 0.5 to 3 mol/L of LiN(SO₂F)₂ in the non-aqueous solvent, or from 0.5 to 3 mol/L of LiN(SO₂F)₂ and LiPF₆ in the non-aqueous solvent, wherein LiN(SO₂F)₂/LiPF₆, a weight ratio of the LiN(SO₂F)₂ to the LiPF₆, is from 100/0 to 1/99.

4. The lithium ion secondary battery according to any one of claims 1 to 3, wherein the non-aqueous solvent comprises ethylene carbonate and propylene carbonate, and ethylene carbonate/propylene carbonate, a volume ratio of the ethylene carbonate to the propylene carbonate, is from 49/51 to 10/90.

5. A non-aqueous electrolytic solution comprising an electrolyte salt dissolved in a non-aqueous solvent, the non-aqueous electrolytic solution comprising a pivalate ester in an amount that is 0.1 vol% or greater and less than 5 vol% with respect to the non-aqueous solvent, the pivalate ester having from 12 to 13 carbons with a flash point of 90°C or higher and a viscosity of from 2 to 2.3 cp at 25°C.

6. The non-aqueous electrolytic solution according to claim 5, comprising at least one selected from the group consisting of (i), (ii) and (iii) below:
(i) the pivalate ester is at least one selected from the group consisting of n-heptyl pivalate, 2-ethylhexyl pivalate, and 2-octyl pivalate;
(ii) the electrolyte salt is LiN(SO₂F)₂ and LiPF₆, the LiN(SO₂F)₂ and the LiPF₆ being dissolved in a total amount of from 0.5 to 3 mol/L in the non-aqueous solvent, and LiN(SO₂F)₂/LiPF₆, a weight ratio of the LiN(SO₂F)₂ to the LiPF₆, is from 100/0 to 1/99; and
(iii) the non-aqueous solvent is ethylene carbonate and propylene carbonate, ethylene carbonate/propylene carbonate, a volume ratio of the ethylene carbonate to the propylene carbonate, is from 49/51 to 10/90.
